(19) Europäisches Patentamt
European Patent Office
Office européen des brevets

(11) **EP 4 637 183 A1**

(12) **EUROPEAN PATENT APPLICATION**
published in accordance with Art. 153(4) EPC

(43) Date of publication:
**22.10.2025 Bulletin 2025/43**

(21) Application number: **22968265.3**

(22) Date of filing: **16.12.2022**

(51) International Patent Classification (IPC):
**H04R 5/00** (2006.01)        **H04R 29/00** (2006.01)
**H04S 3/00** (2006.01)

(52) Cooperative Patent Classification (CPC):
**H04R 5/00; H04R 29/00; H04S 3/00**

(86) International application number:
**PCT/CN2022/139713**

(87) International publication number:
**WO 2024/124561 (20.06.2024 Gazette 2024/25)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Beijing Xiaomi Mobile Software Co.,
Ltd.
Beijing 100085 (CN)**

(72) Inventor: **WANG, Bin
Beijing 100085 (CN)**

(74) Representative: **Stöckeler, Ferdinand et al
Schoppe, Zimmermann, Stöckeler
Zinkler, Schenk & Partner mbB
Patentanwälte
Radlkoferstrasse 2
81373 München (DE)**

(54) **ANALYSIS METHOD AND APPARATUS FOR AUDIO COLLECTION**

(57)    The present application relates to the technical field of data processing, and provides an analysis method and apparatus for audio collection. The method comprises: first, acquiring an audio signal of a stereo sound collected by a terminal device; parsing the audio signal of the stereo sound to obtain audio data respectively corresponding to a plurality of sound channels; then determining parameter information of the stereo sound on the basis of the audio data respectively corresponding to the plurality of sound channels; and according to the parameter information of the stereo sound, analyzing index information of the terminal device for a stereo sound audio collection capability. By applying the technical solution of the present application, the stereo sound collection performance of the terminal device can be analyzed in light of stereo sound parameters obtained by means of actual measurement, so that accurate analysis of the stereo sound audio collection capability of the terminal device can be achieved, and the analysis accuracy of stereo sound audio collection is improved.

obtain an audio signal of stereo sound collected by a terminal — 201

obtain audio data corresponding respectively to a plurality of channels by parsing the audio signal — 202

determine a signal delay difference and an amplitude difference between channels based on the audio data corresponding respectively to the plurality of channels — 203

determine sound source positioning information for the terminal's audio acquisition on the stereo sound based on the signal delay difference and the amplitude difference between channels — 204

FIG. 2

**Description**

<u>TECHNICAL FIELD</u>

The disclosure relates to the field of data processing technology, in particular to an audio acquisition analysis method and an apparatus.

<u>BACKGROUND</u>

With the continuous development of audio technology, stereo sound is becoming increasingly popular. Moreover, with the development of audio terminal, there are many integrated audio of the stereo sound acquisition terminal on the market. The way of acquiring stereo sound is no longer limited to combining multiple microphones, and there can be sets of solutions. Existing stereo sound technology is capable of represent flat sound. As audio performance capability increases, the performance requirements of the terminal become more complex.

Currently, the performance analysis for the terminal's audio acquisition capability for the audio of the stereo sound is usually based on theoretical analysis and derivation of ideal acoustic parameters determined from hardware information of the terminal. However, when facing an actual terminal, there are many factors that make it difficult to achieve an ideal performance of the terminal, and thus the existing analysis method of sound acquisition for the stereo sound may affect the accuracy of analysis results.

<u>SUMMARY</u>

The disclosure provides an audio acquisition analysis method and an apparatus, to improve the accuracy of audio of the stereo sound acquisition analysis.

According to a first aspect of embodiments of the disclosure, an audio acquisition analysis method is provided. The method includes: obtaining an audio signal of stereo sound collected by a terminal; obtaining audio data corresponding respectively to a plurality of channels by parsing the audio signal; determining parameter information of the stereo sound based on the audio data corresponding respectively to the plurality of channels; and analyzing metric information about the terminal's audio acquisition capability for the stereo sound based on the parameter information.

In some embodiments of the disclosure, determining parameter information of the stereo sound based on the audio data corresponding respectively to the plurality of channels, includes: determining a signal delay difference and an amplitude difference between channels based on the audio data corresponding respectively to the plurality of channels; and analyzing metric information about the terminal's audio acquisition capability for the stereo sound based on the parameter information, includes: determining sound source positioning information for the terminal's audio acquisition on the stereo sound based on the signal delay difference and the amplitude difference between channels.

In some embodiments of the disclosure, determining sound source positioning information for the terminal's audio acquisition on the stereo sound based on the signal delay difference and the amplitude difference between channels, includes: obtaining the sound source positioning information by performing calculation through a preset human auditory positioning model based on the signal delay difference and the amplitude difference between channels.

In some embodiments of the disclosure, after determining the sound source positioning information for the terminal's audio acquisition on the stereo sound based on the signal delay difference and the amplitude difference between channels, the method further includes: determining pickup angle information for the terminal's audio acquisition on the stereo sound based on the sound source positioning information.

In some embodiments of the disclosure, after determining the sound source positioning information for the terminal's audio acquisition on the stereo sound based on the signal delay difference and the amplitude difference between channels, the method further includes: determining sound source positioning deviation information for the terminal's audio acquisition on the stereo sound based on the sound source positioning information and actual sound source position information of the stereo sound.

In some embodiments of the disclosure, wherein after determining the sound source positioning information for the terminal's audio acquisition on the stereo sound based on the signal delay difference and the amplitude difference between channels, the method further includes: determining positioning deviation information for the terminal to perform audio and video acquisition based on the sound source positioning information and video acquisition positioning information for the terminal's video acquisition corresponding to the stereo sound.

In some embodiments of the disclosure, determining parameter information of the stereo sound based on audio data corresponding respectively to the plurality of channels, includes: determining a signal delay of a target channel based on the audio data corresponding respectively to the plurality of channels , wherein the target channel is a channel with a minimum delay among the plurality of channels; and analyzing metric information about the terminal's audio acquisition capability for the stereo sound based on the parameter information, includes: determining a delay difference between audio acquisition and video acquisition by the terminal based on the signal delay of the target channel and a delay of the terminal's video signal acquisition.

In some embodiments of the disclosure, determining parameter information of the stereo sound based on audio data corresponding respectively to the plurality of channels, includes: determining frequency response difference information between channels and a delay difference on a link inside the terminal based on the audio data corresponding respectively to the plurality of channels; analyzing metric information about the terminal's audio acquisition capability for the stereo sound based on the parameter information, includes: determining a channel consistency for the terminal's audio acquisition on the stereo sound based on the frequency response difference information between channels and the delay difference on the link inside the terminal.

In some embodiments of the disclosure, determining parameter information of the stereo sound based on audio data corresponding respectively to the plurality of channels, includes: determining frequency response information of the plurality of channels based on the audio data corresponding respectively to the plurality of channels; analyzing metric information about the terminal's audio acquisition capability for the stereo sound based on the parameter information, includes: determining a frequency range for the terminal's audio acquisition on the stereo sound and crossover point information in a low-frequency range for the terminal's audio acquisition on the stereo sound based on the frequency response information of the plurality of channels.

In some embodiments of the disclosure, obtaining audio data corresponding respectively to the plurality of channels by parsing the audio signal, includes: in a case that the terminal is a device requiring decoding, obtaining the audio data corresponding respectively to the plurality of channels by parsing a decoded audio signal of the stereo sound.

In some embodiments of the disclosure, analyzing metric information about the terminal's audio acquisition capability for the stereo sound based on the parameter information, includes: analyzing the metric information about the terminal's audio acquisition capability for the stereo sound based on the parameter information determined after each update of a sound source position, wherein an interval between sound source positions in two adjacent times is determined according to positioning accuracy information of the terminal.

According to a second aspect of embodiments of the disclosure, an audio acquisition analysis apparatus is provided. The apparatus includes: an obtaining module, configured to obtain an audio signal of stereo sound collected by a terminal; a parsing module, configured to obtain audio data corresponding respectively to a plurality of channels by parsing the audio signal; a determining module, configured to determine parameter information of the stereo sound based on the audio data corresponding respectively to the plurality of channels; and an analyzing module, configured to analyze metric information about the terminal's audio acquisition capability for the stereo sound based on the parameter information.

According to a third aspect of embodiments of the disclosure, an electronic device is provided. The electronic device includes: a storage medium, a processor and a computer program stored on the storage medium and executable on the processor. The processor implements the method described in the embodiments of the first aspect when executing the computer program.

According to a fourth aspect of embodiments of the disclosure, a computer storage medium is provided. The computer storage medium stores a computer program, and when the computer program is executed by a processor, the method described in the embodiments of the first aspect is implemented.

The embodiments of the disclosure provide an audio acquisition analysis method and an apparatus. As compared with the existing method of deducing and analyzing according to ideal acoustic parameters, the embodiments of the disclosure can perform actual test and analysis on a terminal to obtain an accurate analysis scheme of the terminal's audio acquisition capability on the stereo sound. In detail, an audio signal of stereo sound collected by a terminal is obtained, and then audio data corresponding respectively to a plurality of channels are obtained by parsing the audio of the stereo sound signal. Moreover, parameter information of the stereo sound is determined based on the audio data corresponding respectively to the plurality of channels, and metric information about the terminal's audio acquisition capability for the stereo sound is analyzed based on the parameter information. By applying the technical solution of the embodiments of the disclosure, the terminal's audio acquisition capability on the stereo sound can be analyzed in combination with the parameters of the stereo sound obtained by actual measurement, so that the terminal's audio acquisition capability on the stereo sound can be analyzed accurately, thereby improving the accuracy of analysis for the audio acquisition on the stereo sound.

Additional aspects and advantages of the disclosure will be given in part in the following descriptions, become apparent in part from the following descriptions, or be learned from the practice of the disclosure.


## BRIEF DESCRIPTION OF THE DRAWINGS

Above and/or additional aspects and advantages of the disclosure will become apparent and more readily appreciated from the following descriptions made with reference to the accompanying drawings, in which:

FIG. 1 is a flowchart of an audio acquisition analysis method according to an embodiment of the disclosure.

FIG. 2 is a flowchart of an audio acquisition analysis method according to an embodiment of the disclosure.

FIG. 3 is a flowchart of an audio acquisition analysis method according to an embodiment of the disclosure.

FIG. 4 is a flowchart of an audio acquisition analysis method according to an embodiment of the disclosure.

FIG. 5 is a flowchart of an audio acquisition analysis method according to an embodiment of the disclosure.

FIG. 6 is a block diagram of an audio acquisition analysis apparatus according to an embodiment of the disclosure.

FIG. 7 is a schematic diagram of an electronic device provided by an embodiment of the disclosure.

## DETAILED DESCRIPTION

Embodiments of the disclosure are described in detail below, and examples of which are shown in the accompanying drawings, in which the same or similar reference numerals throughout represent the same or similar elements or elements having the same or similar functions. The embodiments described below with reference to the accompanying drawings are exemplary and are intended to be used to explain the disclosure, but should not be construed as limiting the disclosure. It should be noted that the embodiments of the disclosure and features in the embodiments may be combined with each other without conflict.

The terms used in the disclosure are only for the purpose of describing specific embodiments, and are not intended to limit the embodiments of the disclosure. The singular forms of "a" and "the" used in the disclosure and attached claims are also intended to include plural forms, unless the context clearly indicates other meanings. It is understandable that the term "and/or" as used herein refers to and includes any or all possible combinations of one or more associated listed items.

It is understandable that although the terms "first", "second", and "third" may be used in the embodiments of the disclosure to describe various types of information, the information should not be limited by these terms. These terms are only used to distinguish the same type of information from each other. For example, without departing from the scope of the embodiments of the disclosure, the first information may also be referred to as the second information, and similarly, the second information may also be referred to as the first information. Depending on the context, the term "if" as used herein may be interpreted as "when", "while" or "in response to determining".

Generally, the existing audio acquisition analysis method refers to test and analysis of single-channel audio acquisition performance of the terminal, while the audio of the stereo sound acquisition capability is based on theoretical analysis and deduced according to ideal acoustic parameters determined according to hardware information of terminal. However, when facing an actual terminal, there are many factors that make it difficult for the terminal to achieve the desired performance, and thus the existing analysis way of analyzing audio of the stereo sound acquisition will affect the accuracy of analysis results.

Therefore, the embodiments propose an audio acquisition analysis method and an apparatus, to improve the accuracy of audio of the stereo sound acquisition analysis.

An audio acquisition analysis method and an apparatus provided by the disclosure will be introduced in detail below in combination with the accompany drawings.

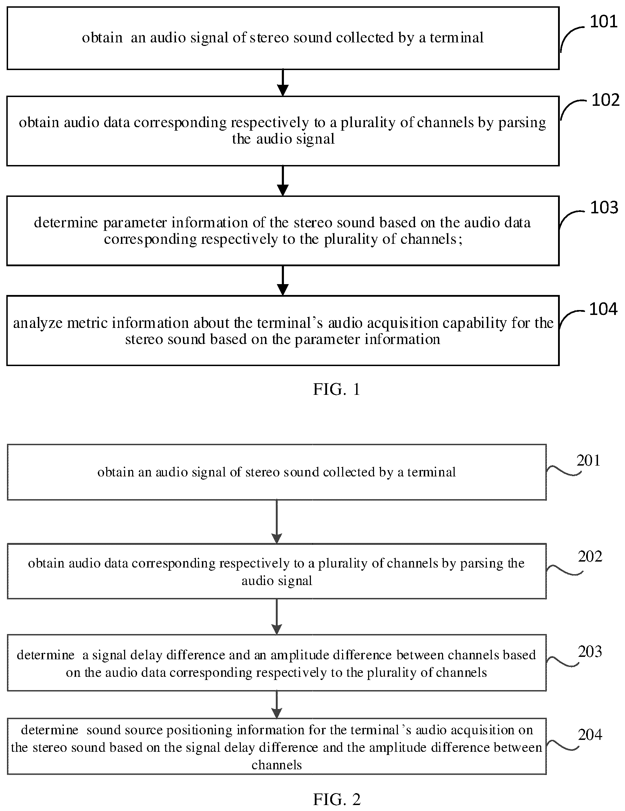

FIG. 1 is a flowchart of an audio acquisition analysis method according to an embodiment of the disclosure. As illustrated in FIG. 1, the method includes the following steps.

At step 101, an audio signal of stereo sound collected by a terminal is obtained.

The terminal may be a device capable of acquiring audio of the stereo sound, such as a smart phone, a tablet computer, a smart watch, etc. The terminal is able to acquire audio of the stereo sound from a sound source via a microphone. The audio of the stereo sound may comprise data of at least two channels (e.g., in addition to comprising a left channel and a right channel, it may also comprise a bass channel, etc.). In this embodiment, the acquired audio signal may be a standard stereo signal that the terminal output to a playback system for the acquired audio of the stereo sound, and a specific analysis of audio acquisition is performed based on the standard stereo signal, for example, the processes shown in steps 102-104.

At step 102, audio data corresponding respectively to a plurality of channels are obtained by parsing the audio signal of the stereo sound.

The audio data may include information related to impulse response and frequency response corresponding to each of the plurality of channels.

For example, audio data corresponding to the left channel, audio data corresponding to the right channel and audio data corresponding to the bass channel are obtained by analyzing the audio signal of the stereo sound.

At step 103, parameter information of the stereo sound is determined based on the audio data corresponding respectively to the plurality of channels.

The parameter information of the stereo sound may include: intensity differences between channels, frequency response differences between channels, time difference between channels, internal delay differences between channels, etc.

At step 104, metric information about the terminal's audio acquisition capability for the stereo sound is analyzed based on the parameter information.

The metric information about the terminal's audio acquisition capability for the stereo sound includes: the consistency of the left and right channels of the terminal, the ability of positioning the sound source (e.g., including the positioning angle of the sound source, a pickup angle and a positioning deviation angle), a frequency range that frequency response meets, low frequency management and other information. Through these metric information, the capability of the terminal to acquire audio of the stereo sound can be analyzed accurately.

By applying the audio acquisition analysis method of this embodiment, compared with the existing way of deducing and analyzing based on ideal acoustic parameters, the stereo sound acquisition performance of the terminal can be analyzed in combination with the parameters of the stereo sound obtained by actual measurement, so that the capability of the terminal to acquire audio of the stereo sound can be analyzed accurately, thereby improving the accuracy of analysis for audio of the stereo sound acquisition.

Currently, the existing technical solution cannot analyze the positioning accuracy of the audio of the stereo sound. As an optional way of the embodiment in FIG. 1, this embodiment provides a specific method as shown in FIG. 2, which can be used to analyze the positioning accuracy of the terminal for performing audio of the stereo sound acquisition. The method includes the following steps.

At step 201, an audio signal of the stereo sound collected by a terminal is obtained.

Audio of the stereo sound is usually output in the format of audio data of at least two channels (including a bass channel). Since different playback formats will have different playback effects, the playback format needs to be described in detail, including the number of channels, channel correspondence, an arrangement of playback speakers, and relevant acoustic environment requirements.

In order to accurately analyze the positioning accuracy of the terminal for the audio of the stereo sound, the test environment selected in this embodiment may be a quiet free field, in which there are no other sound sources except a test sound source. The test sound source may be a standard coaxial loudspeaker with the main axis orientated to the reference point.

The reference point, the main axis direction and a direction of the terminal (i.e., the device under test) may be pre-defined by its manufacturer, or selected according to actual usage. For a device that includes a video acquirement component, the reference point and the main axis direction should be consistent with the video acquirement component. For the convenience of analysis, it is necessary to set a reference point for the terminal. For example, a spherical coordinate system is established with the reference point of the terminal as the center, the main axis direction is the positive direction of the x-axis, the horizontal-left direction is the positive direction of the y-axis, and the vertical-upward direction is the positive direction of the z-axis. The channel reference point may be the theoretical transducer center of each channel. The main axis direction is consistent with the terminal. The positional relationship between the channel reference point and the terminal reference point needs to be illustrated. The specific coordinates are specified in the spherical coordinate system with the terminal's reference point as the center. In this embodiment, the acquired audio signal of the stereo sound (output signal) acquired by the terminal may be selected from a standard stereo sound signal (including a bass channel) ultimately output to the playback system in the terminal for analysis.

The test sound source may be placed at a position where the horizontal angle of device under test is $\varphi$, the vertical angle is $\theta$, and the distance is r. In the present embodiment, the test sound source may be placed at different positions ($\varphi$, $\theta$,r) for testing and analyzing. The metric information about the terminal's audio acquisition capability is analyzed according to the parameter information of the stereo sound determined after each update of sound source position. An interval between two adjacent sound source positions (test sound source positions) is determined according to a positioning accuracy of the terminal, which enables accurate analysis of audio acquisition capability of the terminal.

The test position range may cover the spatial range within which the terminal can acquire audio and/or video. For a device that acquires audio and video simultaneously, the test position range must be wider than a possible video acquirement range. The interval between two adjacent sound source positions (test sound source positions) meets the test requirements for equipment accuracy, such as interval<positioning accuracy/2. The positioning accuracy is the resolution of the terminal in the direction (unit: °) defined by the manufacturer or selected based on the actual situation. Meanwhile, with reference to the direction of the horizontal plane of human ears, when the direction of the sound source moves sideways, the positioning accuracy can be increased gradually by angle.

The test sound source may play sweep signals and full-band noise. According to the audio data of the final output channel of the terminal, the impulse response and frequency response at each position are calculated and measured by executing the processes shown in the following steps 202-203. For the terminal with simultaneous audio and video acquisition, each time the test sound source starts playing the test signal of the audio of the stereo sound, a light signal needs to be emitted simultaneously to the video acquisition component at the test sound source as marker A for marking the video time.

At step 202, audio data corresponding respectively to a plurality of channels are obtained by parsing the audio signal.

In an embodiment of the disclosure, in a case that the terminal is a device requiring decoding, the audio data corresponding respectively to the plurality of channels are obtained by parsing the decoded audio signal.

For the device requiring decoding, the decoded audio signal is selected for test analysis to ensure that the terminal's audio acquisition capability can be accurately analyzed. For example, a recording device in the center\side (M \S) format performs test analysis based on the decoded signals on the left channel (L) and the right channel (R).

At step 203, a signal delay difference and an amplitude difference between channels are determined based on the audio data corresponding respectively to the plurality of channels.

This embodiment can calculate the audio signals acquired by the terminal to obtain impulse responses I at different horizontal angles, different vertical angles and different distances.

The time when the impulse response reaches its maximum value is a delay T of the audio signal. Delay of each frequency band: the impulse response is filtered to retain the desired component of the frequency band, and the time to the maximum value after filtering is the delay of the corresponding frequency band. The delay may include a delay $T_{air}$ of the sound source propagating through the air to the corresponding microphone, and a delay $T_{int}$ on a link inside the terminal (including a vibration of the microphone, an internal signal delay, an analog-to-digital conversion, and a related signal processing delay, etc.). The specific calculation equation is shown in Equation 1 below.

$$T = T_{air} + T_{int} \qquad \text{(Equation 1)}$$

The delay $T_{air}$ of the sound source propagating through the air to the corresponding microphone is calculated based on a distance d from the microphone to the sound source and a speed of sound c. The specific calculation equation is shown in the following Equation 2.

$$T_{air} = \frac{d}{c} \qquad \text{(Equation 2)}$$

In this embodiment, the difference in signal delay between channels may be the difference in signal delay between channels at the sound source position. For example, based on Equation 1 and Equation 2, it is calculated that the delay of the left channel is $T_L$ and the delay of the right channel is $T_R$, the time difference between the left and right channels is $\Delta T = T_L - T_R$. The time difference between channels is affected by the difference in sound source propagation distance as well as the difference in the delay within the terminal. Generally, the delay is shorter for channels closer to the sound source. The time difference between channels should satisfy the time difference relationship required to construct a correct sound imaging.

The output signal amplitude calculated by the impulse response is a signal amplitude L. Amplitude of each frequency band: the impulse response is filtered to retain the desired component of the frequency band, and the output signal amplitude calculated by filtering is the amplitude of the corresponding frequency band. The amplitude may include an amplitude change $L_{air}$ caused by the sound source propagating through the air to the corresponding microphone, and the amplitude change $L_{int}$ caused by the terminal itself. The specific calculation equation is shown in the following Equation 3.

$$L = L_{air} + L_{int} \qquad \text{(Equation 3)}$$

In this embodiment, the signal delay difference between channels may be an intensity difference between channels. For example, based on Equation 3, it is calculated that the amplitude of the left channel is $L_L$ and the amplitude of the right channel is $L_R$, the amplitude difference between the left and right channels is $\Delta L = L_L - L_R$. The intensity difference between channels is affected by a difference in channel directivity and attenuation during sound source propagation. Generally, the channels closer to the sound source have stronger intensity. The intensity difference between channels should satisfy the intensity difference relationship required to construct a correct sound imaging.

At step 204, a sound source positioning information of the terminal's audio acquisition is determined according to the signal delay difference and the amplitude difference between channels.

The method of this embodiment can be used to evaluate and analyze the positioning accuracy of the stereo sound audio acquisition terminal accurately. The sound source positioning information for the terminal's audio acquisition on the stereo sound can be used to analyze the positioning accuracy of the audio acquisition on the stereo sound.

In an embodiment of the disclosure, step 204 includes: obtaining the sound source position information by performing calculation through a preset human auditory positioning model based on the signal delay difference and the amplitude difference between channels.

For example, since the audio of the stereo sound is able to re-present horizontal angular differences in sound very well, the ability to determine distances and heights is weak. Therefore, this embodiment may test and analyze only the horizontal positioning capability. According to the obtained signal and corresponding parameters, through the corresponding human auditory positioning model f(x), the sound imaging positioning angle A of the sound picked up by the terminal at different positions after corresponding playback are obtained. The specific calculation equation is shown in the following Equation 4.

$$A\ (\varphi)\ = f(\triangle T\ (\varphi, \theta, r)\ ) + f(\triangle L\ (\varphi, \theta, r)\ ) \qquad \text{(Equation 4)}$$

The sound imaging positioning angle A ( $\varphi$) represents the horizontal angle of different test positions ($\varphi$, $\theta$,r) in actual human ear perception. The calculation process of $\triangle$T and $\triangle$L can refer to the example contents shown in the above step 203, which will not be repeated here.

In an embodiment of the disclosure, after step 204, the method of this embodiment further includes: determining pickup angle information for the terminal's audio acquisition on the stereo sound according to the sound source positioning information. For example, the pickup angle may be the angle at which the terminal can correctly record sound image, specifically may be a discontinuous angle interval. According to the requirements of the terminal, it is categorized into an optimal pickup angle and a maximum pickup angle. Optimal pickup angle: a position change angle and a sound imaging change angle (A ($\varphi$)) maintain a linear relationship. Maximum pickup angle: the position change angle and the sound image change angle (A ($\varphi$)) are in the same direction.

In an embodiment of the disclosure, after step 204, the method of this embodiment further includes: determining sound source positioning deviation information for the terminal's audio acquisition on the stereo sound according to the sound source positioning information and actual sound source position information of the stereo sound. The sound source positioning deviation information can be used to better analyze the terminal's audio acquisition capability on the stereo sound. For example, the positioning deviation angle=positioning angle-angle of actual sound source. In detail, a difference between (A ($\varphi$)) and $\varphi$ can be calculated to determine the sound source positioning deviation.

For a terminal that can simultaneously acquire audio and video, this embodiment also proposes a scheme for analyzing the synchronization of audio and video. Correspondingly and optionally, in an embodiment of the disclosure, after step 204, the method of this embodiment may further include: determining positioning deviation information of the terminal's audio acquisition and video acquisition according to the sound source positioning information and video acquisition positioning information for the terminal's video acquisition corresponding to the stereo sound.

The angle of view of a video is a range of angles at which a camera can receive images in a general environment. As shown in the example of step 201, the position where the marker A appears in the video frame is the video position of the test position, and the video positioning is converted to a horizontal angle B($\varphi$), and an audio-video position deviation $A_B$ ($\varphi$) is represented by the following Equation 5.

$$A_B\ (\varphi)\ = A\ (\varphi)\ - B\ (\varphi) \qquad \text{(Equation 5)}$$

In this embodiment, the stereo sound acquisition performance of the terminal can be evaluated in combination with parameters obtained in actual measurements and with the stereo sound model for the actual terminal. A time difference and an intensity difference between channels of the terminal are obtained through the impulse responses of the terminal to the sound source at different positions, for analyzing the positioning performance of the terminal for audio acquisition on the stereo sound. The existing most of terminals have both video and audio acquisition capabilities, but lack a solution for measuring and analyzing the situation of combining audio and video. The present embodiment, however, for the terminal for simultaneous acquisition of audio and video, can analyze the situation of combining audio and video signals by comparing the audio and video signals in terms of positioning ability, and then realize the measurement and analysis of effect of combining with video. By applying the technical scheme of this embodiment, the terminal can accurately analyze the audio acquisition capability on the stereo sound, thereby improving the accuracy of analysis for audio acquisition on the stereo sound.

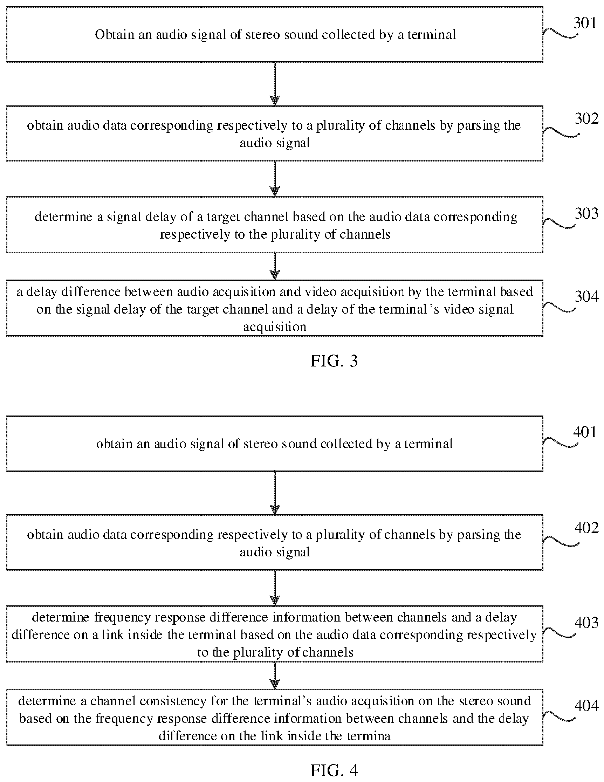

In addition to analyzing the positioning performance of the terminal for audio acquisition on the stereo sound, the analysis method of this embodiment can also be used to analyze the delay difference of the acquired audio and video. Correspondingly, as another optional method of the embodiment of FIG. 1, this embodiment provides a specific method as shown in FIG. 3. The method includes the following steps.

At step 301, an audio signal of the stereo sound acquired by a terminal is obtained.

The pre-setting process of the test environment and the test sound source and the like can be found in the corresponding description in step 201 and will not be repeated here. For the present embodiment, the test sound source may be placed at a position where the horizontal angle of device under test is φ, the vertical angle is θ, and the distance is r. In this embodiment, the test sound source may be placed at different positions (φ, θ,r) for testing and analyzing. The metric information about the terminal's audio acquisition capability for the stereo sound is analyzed according to the parameter information of the stereo sound obtained after each update of sound source position. An interval between two adjacent sound source positions (test sound source positions) is determined according to positioning accuracy information of the terminal, which enables accurate analysis of audio acquisition capability of the terminal on the stereo sound.

At step 302, audio data corresponding respectively to a plurality of channels are obtained by parsing the audio signal of the stereo sound.

In an embodiment of the disclosure, in a case that the terminal is a device requiring decoding, the audio data corresponding to the plurality of channels are obtained respectively by parsing the decoded audio signal. For the device requiring decoding, the decoded stereo signal is selected for test analysis to ensure that the audio acquisition capability of the terminal on the stereo sound can be accurately analyzed.

At step 303, a signal delay of a target channel is determined based on the audio data corresponding respectively to the plurality of channels.

The target channel is the channel with the minimum delay among the channels.

At step 304, a delay difference between audio acquisition on the stereo sound and stereo video acquisition of the terminal is determined according to the signal delay of the target channel and a delay of video signal acquisition.

For the terminal that can acquire audio and video simultaneously, this embodiment proposes a solution for analyzing the synchronization of the audio and video. For example, the delay difference between audio acquisition on the stereo sound and stereo video acquisition can be analyzed by comparing the data with the minimum delay in the left and right channels with the video delay. The calculation process is shown in the following Equation 6.

$$\Delta T_{a/v} = \min\{T_L, T_R\} - T_v \qquad \text{(Equation 6)}$$

$\Delta T_{a/v}$ represents the delay difference between audio acquisition on the stereo sound and stereo video acquisition of the terminal, $T_L$ represents a delay on the left channel, $T_R$ represents a delay on the right channel, and $T_v$ represents a duration from the start of the test to the appearance of marker A, which is the delay $T_v$ of the video signal.

By applying the audio acquisition analysis method provided in this embodiment, it is possible to accurately analyze the delay difference between audio acquisition on the stereo sound and stereo video acquisition of the terminal, so as to achieve accurate analysis of the audio acquisition capability of the terminal on the stereo sound, thus improving the accuracy of analysis for audio acquisition on the stereo sound.

The analysis method of this embodiment can also be used to analyze the channel consistency of audio acquirement of the terminal on the stereo sound. Correspondingly, as another optional method of the embodiment of FIG. 1, this embodiment provides a specific method as shown in FIG. 4. The method includes the following steps.

At step 401, an audio signal of the stereo sound acquired by a terminal is obtained.

The pre-setting process of the test environment and the test sound source and the like can be found in the corresponding description of step 201 and will not be repeated here. For the present embodiment, the test sound source may be placed at a position where the horizontal angle of device under test is φ, the vertical angle is θ, and the distance is r. In the present embodiment, the test sound source may be placed at different positions (φ, θ,r) for testing and analyzing. The metric information of terminal's audio acquisition capability on the stereo sound is analyzed according to the stereo parameter information obtained by determining after each update of sound source position. An interval between two adjacent sound source positions (test sound source positions) is determined according to a positioning accuracy information of the terminal, which enables accurate analysis of audio acquisition capability of the terminal on the stereo sound.

In this embodiment, for an audio of the stereo sound, the plurality of channels are measured separately to obtain the respective performance of each channel. Compared with traditional single-channel audio which mainly uses the main axis direction for acquisition, audio of the stereo sound needs to use microphones in all direction to acquire audio at various angles, and measurement and analysis in all direction is required. All measurement data uses the reference point of respective channel, and the direction of the reference coordinate is consistent with that of the device reference coordinate. The parameters of respective channel need to remove the impact of the test signal propagating through the air.

According to the measurement and analysis method of single-channel equipment, audio measurement is performed respectively for each channel in all direction, and the parameters of each channel in all direction are calculated, including a frequency response, a phase response, a signal-to-noise ratio (SNR), an AOP, total harmonic distortion (THD) and other related parameters. The directivity of respective channel may be the sensitivity of the channel in different directions, including amplitude responses in different directions and at different frequencies. It is necessary to cover all frequencies in the working frequency band and angles at which the equipment can perform acquisition. Internal delay of respective channel, for example, may be a difference in delays $T_{int}$ between the left and right channels on the internal link of the terminal. In this embodiment, the delay inside the device of respective channel can be calculated by Equation 7.

$$T_{int} = T - T_{air} \qquad \text{(Equation 7)}$$

T represents an audio signal delay of the channel, and $T_{air}$ represents a delay of sound source propagating through the air to a corresponding microphone.

The directivity type of respective channel is classified into directivity and omni-directivity according to the directivity of the channel. Omni-directivity: there is no difference in amplitude response in each direction. Directivity: there are differences in amplitude response in each direction. The maximum response angle of the directivity channel is the angle at which the channel obtains the maximum response. If there are multiple maximum response angles (such as dipole), it is necessary to indicate all the maximum response angles. Channel phase response: the phase response of channel output signal at various angles and frequencies.

At step 402, audio data corresponding respectively to a plurality of channels are obtained by parsing the audio signal of the stereo sound.

In an embodiment of the disclosure, if the terminal is a device requiring decoding, the audio data corresponding to the plurality of channels are obtained respectively by parsing the decoded audio signal of the stereo sound. For the device requiring decoding, the decoded stereo signal is selected for test analysis to ensure that the audio acquisition capability of the terminal on the stereo sound can be accurately analyzed.

At step 403, frequency response difference information between channels and a delay difference on a link inside the terminal are determined based on the respective audio data corresponding to the plurality of channels.

For example, in the process of determining the frequency response difference information between channels, the frequency response of the left channel at the test point (the current position of the test sound source) is set to $F_L$, and $F_L$ at 1kHz is set to 0dB. The frequency response of the right channel at the test point is $F_R$, and $F_R$ is 0dB at 1kHz. The frequency response difference $\Delta F$ between the left and right channels is calculated using the following Equation 8.

$$\triangle F = F_L - F_R \qquad \text{(Equation 8)}$$

The difference in frequency response between channels is only affected by the difference between the left and right channels of the device and is independent of the effects of the test signal propagating through the air. The selected channel has a response of 0dB at 1kHz. The difference in frequency fluctuation between the left and right channels at the test point is obtained by comparison.

When determining the delay difference on the link inside the terminal between channels, the internal delay difference between channels is the difference in internal signal delay between channels at the sound source position. For example, the internal delay of the left channel is $T_{Lint}$, and the internal delay of the right channel is $T_{Rint}$, the internal delay time difference between the left and right channels is calculated by the following Equation 9.

$$\triangle T_{int} = T_{Lint} - T_{Rint} \qquad \text{(Equation 9)}$$

The internal time difference between channels is only affected by the internal delay difference of the terminal.

At step 404, a channel consistency for the terminal's audio acquisition on the stereo sound is determined according to the frequency response difference information between channels and the delay difference on the link inside the terminal.

The consistency of the left and right channels of the device is analyzed by two parameters: the internal delay difference $\triangle T_{int}$ between channels and the frequency response difference $\triangle F$ between the left and right channels at the test position (e.g., the current placement of the sound source). For example, $\triangle T_{int}$ and $\triangle F$ both have their own corresponding standard parameters, and they are compared with their own corresponding standard parameters to analyze the channel consistency of audio acquisition of the terminal on the stereo sound.

By applying the audio acquisition analysis method provided in this embodiment, it is possible to accurately analyze the channel consistency of audio acquisition by the terminal on the stereo sound, which can achieve accurate analysis of the audio acquisition capability of the terminal on the stereo sound, thus improving the accuracy of analysis for audio acquisition on the stereo sound.

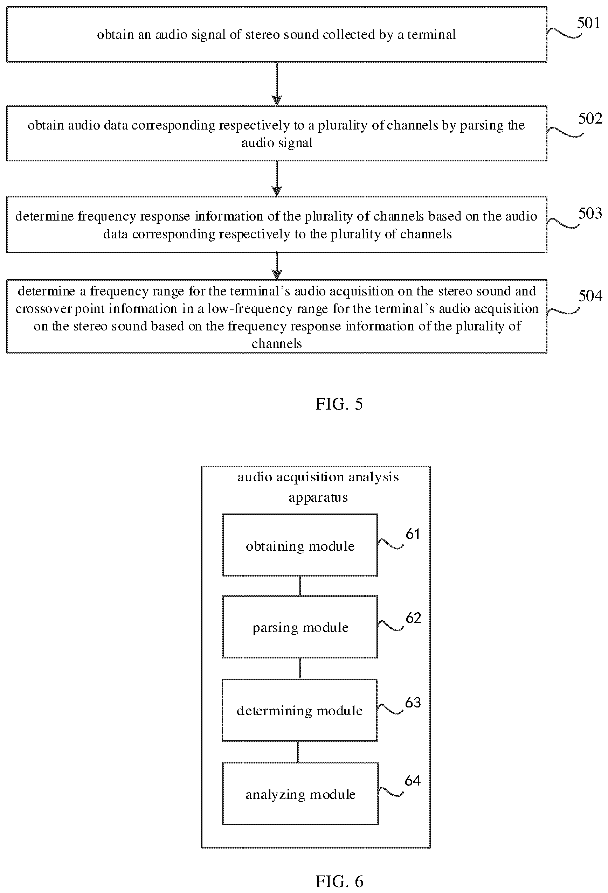

The analysis method of this embodiment can also be used to analyze a frequency range for the terminal's audio acquisition on the stereo sound and crossover point information in a low-frequency range for the terminal's audio acquisition on the stereo sound. Correspondingly, as another optional method of the embodiment of FIG. 1, this embodiment provides a specific method as shown in FIG. 5. The method includes the following steps.

At step 501, an audio signal of the stereo sound acquired by a terminal is obtained.

The pre-setting process of the test environment and the test sound source and the like can be found in the corresponding descriptions of step 201 and step 401 and will not be repeated here. For this embodiment, the test sound source may be placed at a position where the horizontal angle of device under test is φ, the vertical angle is θ, and the distance is r. In the present embodiment, the test sound source may be placed at different positions (φ, θ,r) for testing and analyzing. The metric information of the terminal's audio acquisition capability on the stereo sound is analyzed according to the stereo parameter information obtained by determining after each update of sound source position. An interval between two adjacent sound source positions (test sound source positions) is determined according to a positioning accuracy information of the terminal, which enables accurate analysis of audio acquisition capability of the terminal on the stereo sound.

At step 502, audio data corresponding respectively to a plurality of channels are obtained by parsing the audio signal of the stereo sound.

In an embodiment of the disclosure, if the terminal is a device requiring decoding, the audio data corresponding to the plurality of channels are obtained respectively by parsing the decoded audio signal of the stereo sound. For the device requiring decoding, the decoded stereo signal is selected for test analysis to ensure that the audio acquisition capability of the terminal on the stereo sound can be accurately analyzed.

At step 503, frequency response information of the plurality of channels is determined based on the audio data corresponding respectively to the plurality of channels.

At step 504, a frequency range for the terminal's audio acquisition on the stereo sound and crossover point information in a low-frequency range for the terminal's audio acquisition on the stereo sound are determined according to frequency response information of the plurality of channels.

For example, the frequency response of the terminal may be the frequency responses of the left channel + right channel + bass channel at test positions (e.g., different positions of the test sound source). The amplitude of 1KHz on the main axis direction (horizontal angle 0°) is taken as 0dB for the frequency response. The frequency response at different test positions are plotted. The frequency response of each test position meets the required frequency range (e.g., -3dB<frequency response<3dB). For low-frequency management, since the stereo includes a low-frequency channel and the frequency response of the left and right channels generally increases from low frequencies to high frequencies in the low-frequency range. The frequency response of the low-frequency channel decreases from low frequencies to high frequencies in the low-frequency range. Therefore, it is necessary to detect the crossover point of the device in the low-frequency range to evaluate the effect of low-frequency management of the device. The crossover point of the left and right channels: the frequency points where the low frequency of the left and right channels drops to -3dB. The crossover point of the low frequency channel: the frequency point where the bass channel drops to -3dB.

By applying the audio acquisition analysis method provided in this embodiment, it is possible to accurately analyze the frequency range for the terminal's audio acquisition on the stereo sound and the crossover point information in a low-frequency range for the terminal's audio acquisition on the stereo sound, which can achieve accurate analysis of the audio acquisition capability of the terminal on the stereo sound, thus improving the accuracy of analysis for audio acquisition on the stereo sound.

Corresponding to the audio acquisition analysis method provided in the above-mentioned embodiments, the disclosure also provides an audio acquisition analysis apparatus. Since the audio acquisition analysis apparatus provided in this embodiment of the disclosure corresponds to the audio acquisition analysis method provided in the above-mentioned embodiments, the implementation method of the audio acquisition analysis method is also applicable to the audio acquisition analysis apparatus provided in this embodiment, and will not be described in detail in this embodiment.

FIG. 6 is a block diagram of an audio acquisition analysis apparatus according to an embodiment of the disclosure. The apparatus includes: an obtaining module 61, configured to obtain an audio signal of the stereo sound acquired by a terminal; a parsing module 62, configured to obtain audio data corresponding respectively to a plurality of channels by parsing the audio signal of the stereo sound; a determining module 63, configured to determine parameter information of the stereo sound based on the audio data corresponding respectively to the plurality of channels; and an analyzing module 64, configured to configured to analyze metric information about the terminal's audio acquisition capability for the stereo sound based on the parameter information.

In some embodiments, the determining module 63 is configured to: determine a signal delay difference and an amplitude difference between channels based on the audio data corresponding respectively to the plurality of channels. The analyzing module 64 is configured to: determine sound source positioning information for the terminal's audio acquisition on the stereo sound based on the signal delay difference and the amplitude difference between channels.

In some embodiments, the analyzing module 64 is configured to: obtain the sound source positioning information by performing calculation through a preset human auditory positioning model based on the signal delay difference and the amplitude difference between channels.

In some embodiments, the determining module 63 is configured to: after determining the sound source positioning information for the terminal's audio acquisition on the stereo sound based on the signal delay difference and the amplitude difference between channels, determine pickup angle information for the terminal's audio acquisition on the stereo sound based on the sound source positioning information.

In some embodiments, the determining module 63 is configured to: after determining the sound source positioning information for the terminal's audio acquisition on the stereo sound based on the signal delay difference and the amplitude difference between channels, determine sound source positioning deviation information for the terminal's audio acquisition on the stereo sound based on the sound source positioning information and actual sound source position information of the stereo sound.

In some embodiments, the determining module 63 is configured to: determining the sound source positioning information for the terminal's audio acquisition on the stereo sound based on the signal delay difference and the amplitude difference between channels, determine positioning deviation information for the terminal to perform audio and video acquisition based on the sound source positioning information and video acquisition positioning information for the terminal's video acquisition corresponding to the stereo sound.

In some embodiments, the determining module 63 is configured to: determine a signal delay of a target channel based on the audio data corresponding respectively to the plurality of channels, wherein the target channel is a channel with a minimum delay among the plurality of channels. The analyzing module 64 is configured to: determine a delay difference between audio acquisition and video acquisition by the terminal based on the signal delay of the target channel and a delay of the terminal's video signal acquisition.

In some embodiments, the determining module 63 is configured to: determine frequency response difference information between channels and a delay difference on a link inside the terminal based on the audio data corresponding respectively to the plurality of channels. The analyzing module 64 is configured to: determine a channel consistency for the terminal's audio acquisition on the stereo sound based on the frequency response difference information between channels and the delay difference on the link inside the terminal.

In some embodiments, the determining module 63 is configured to: determine frequency response information of the plurality of channels based on the audio data corresponding respectively to the plurality of channels. The analyzing module 64 is configured to: determine a frequency range for the terminal's audio acquisition on the stereo sound and crossover point information in a low-frequency range for the terminal's audio acquisition on the stereo sound based on the frequency response information of the plurality of channels.

In some embodiments, the parsing module 62 is configured to: in a case that the terminal is a device requiring decoding, obtain the audio data corresponding respectively to the plurality of channels by parsing a decoded audio signal of the stereo sound.

In some embodiments, the analyzing module 64 is configured to: analyze the metric information about the terminal's audio acquisition capability for the stereo sound based on the parameter information determined after each update of a sound source position, wherein an interval between sound source positions in two adjacent times is determined according to positioning accuracy information of the terminal.

The analysis apparatus may be a chip, a component or a module. The apparatus may include a processor and a memory. The obtaining module 61, the parsing module 62, the determining module 63 and the analyzing module 64 are all stored in the memory as program units. The processor executes the above program units stored in the memory to implement corresponding functions.

The processor may include a core, which is used to call the corresponding program unit from the memory. There may be one or more cores. The stereo acquisition performance of the terminal can be analyzed in combination with the stereo parameters obtained in actual measurement, so as to achieve accurate analysis of the audio acquisition capability of the terminal on the stereo sound, thereby improving the accuracy of analysis of audio acquisition on the stereo sound.

The memory may include a non-persistent memory in a computer readable medium, a random access memory (RAM) and/or a non-volatile memory, such as a read-only memory (ROM) or a flash RAM. The memory includes at least one memory chip.

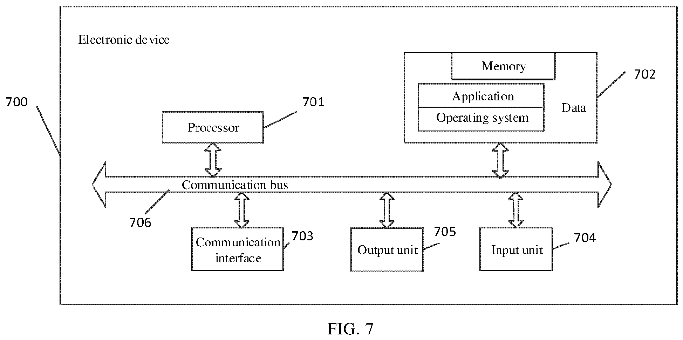

With reference to FIG. 7, FIG. 7 is a schematic diagram of an electronic device 700 suitable for implementing some embodiments of the disclosure. The electronic device shown in FIG. 7 is only an example, and should not bring any limitation to the functions and application scope of the embodiments of the disclosure.

As illustrated in FIG. 7, the electronic device 700 may include a processor 701, a memory 702, a communication interface 703, an input unit 704, an output unit 705 and a communication bus 706. The processor 701 and the memory 702 are connected to each other through the communication bus 706. The communication interface 703, the input unit 704 and the output unit 705 are also connected to the communication bus 706.

The communication interface 703 may be an interface of a communication module, such as an interface of a global system of mobile communication (GSM) module. In this embodiment of the disclosure, the processor 701 may be a central processing unit (CPU), an application-specific integrated circuit (ASIC), a digital signal processor (DSP), an application-specific integrated circuit (ASIC), a field programmable gate array (FPGA) or other programmable logic components.

In a possible implementation, the memory 702 may include a program storage area and a data storage area. The program storage area may store an operating system and applications required for at least one function (such as a user ID authentication function, etc.), and the data storage area may store data created during the use of computers.

In addition, the memory 702 may include a high-speed random access memory, and may also include a non-volatile memory, such as at least one disk storage component or other volatile solid-state storage components.

The processor 701 may call programs stored in the memory 702. In detail, the processor 701 may execute the method shown in any of the embodiments in FIG. 1 to FIG. 5 above.

The memory 702 is used to store one or more programs. The program may include a program code, and the program code includes a computer operation instruction. In this embodiment of the disclosure, the memory 702 at least stores programs for implementing the following functions:

obtaining an audio signal of stereo sound collected by a terminal; obtaining audio data corresponding respectively to a plurality of channels by parsing the audio signal; determining parameter information of the stereo sound based on the audio data corresponding respectively to the plurality of channels; and analyzing metric information about the terminal's audio acquisition capability for the stereo sound based on the parameter information.

The disclosure may also include an input unit 705, which includes at least one of a touch sensor for sensing touches on a touch display panel, a keyboard, a mouse, a camera or a sound pickup device.

The output unit 704 includes at least one of a display, a speaker, a vibration mechanism or a lamp. The display may include a display panel, such as a touch display panel. In a possible situation, the display panel may be configured in the form of a liquid crystal display (LCD) or an organic light-emitting diode (OLED). The vibration mechanism can cause the electronic device 700 to move when in operation. In a possible implementation, the vibration mechanism includes a motor and an eccentric vibrator, and the motor drives the eccentric vibrator to rotate to generate vibration. The brightness and/or color of the lamp is adjustable. In a possible implementation, different information can be presented by at least one of on and off of lighting, a brightness or a color of the lamp, such as prompting warning information by emitting red light.

Certainly, the structure of the electronic device 700 shown in FIG. 7 does not constitute a limitation on the electronic device in the embodiments of the disclosure. In actual applications, the electronic device may include more or fewer components than those shown in FIG. 7, or combine certain components.

An embodiment of the disclosure provides a computer readable medium on which a computer program is stored. When the program is executed by a processor, the analysis method described in the above method embodiments is implemented.

An embodiment of the disclosure provides a processor. The processor is used to run a program, and the analysis method described in the above method embodiments is implemented when the program is running.

An embodiment of the disclosure provides a computer program product. When the computer program product is executed on a data processing device, the data processing device is caused to implement the analysis method described in the above method embodiments.

The electronic device, the processor, the computer readable medium and the computer program product provided in the above embodiments of the disclosure can all be used to execute the corresponding method provided above. Therefore, the beneficial effects that can be achieved can refer to the beneficial effects of the corresponding methods provided above, and will not be repeated here.

The disclosure is described with reference to flowcharts and/or block diagrams of methods, devices (systems), and computer program products according to the embodiments of the disclosure. It should be understood that each process and/or block in the flowcharts and/or block diagrams, or a combination of processes and/or blocks in the flowcharts and/or block diagrams can be implemented by computer program instructions. These computer program instructions can be provided to a processor of a general-purpose computer, a special-purpose computer, an embedded processing machine or a programmable data processing device to produce a machine, so that when the instructions are executed by the processor of the computer or the programmable data processing device, a device for implementing functions specified in one or more processes in the flowcharts and/or one or more blocks in the block diagrams.

These computer program instructions may also be stored in a computer readable memory that can direct a computer or a programmable data processing device to work in a specific manner, so that instructions stored in the computer readable memory can produce an article of manufacture including an instruction device that implements the functions specified in one or more processes in the flowcharts and/or one or more blocks in the block diagrams.

These computer program instructions may also be loaded onto the computer or the programmable data processing device, so that a series of operational steps are executed on the computer or the programmable device to produce a computer-implemented process. The instructions executed on the computer or the programmable device provide steps for implementing the functions specified in one or more processes in the flowcharts and/or one or more blocks in the block diagrams.

In a typical configuration, a computing device includes one or more CPUs, input and output interfaces, a network interfaces and a memory.

The memory may include a non-persistent memory in the computer readable medium, a RAM and/or a non-volatile memory, such as a ROM or a flash RAM. The memory is an example of a computer readable medium.

The computer readable medium include persistent and non-persistent, removable and non-removable mediums, and may use any method or technology for storage of information. The information may be a computer readable instruction, a data structure, a program module or other data. Examples of computer storage medium include, but are not limited to, a phase change memory (PRAM), a static RAM (SRAM), a dynamic RAM (DRAM) or other types of RAMs, a ROM, an electrically erasable programmable ROM (EEPROM), a flash memory or other memory technologies, compact disc ROM (CD-ROM), digital versatile disc (DVD) or other optical memories, magnetic tape cassettes, magnetic disk memories or other magnetic storage devices or any other non-transitory mediums, which can be used to store information that can be accessed by a computing device. As defined in this article, the computer readable medium does not include a transitory media, such as modulated data signal and carrier.

Those skilled in the art should understand that the embodiments of the disclosure may be provided as methods, systems or computer program products. Therefore, the disclosure may take the form of an entirely hardware embodiment, an entirely software embodiment, or an embodiment in software and hardware aspects. Moreover, the disclosure may take the form of a computer program product implemented on one or more computer usable storage medium (including but not limited to disk storage, CD-ROM, optical storage, etc.) containing computer usable program codes.

Only some preferred embodiments of the disclosure and technical principles used are described above, which are not intended to limit the disclosure. For those skilled in the art, various modifications and variations may be made to the disclosure. The scope of invention involved in the disclosure is not limited to the technical solutions formed by a specific combination of the above-mentioned technical features, but should also cover other technical solutions formed by any combination of the above-mentioned technical features or their equivalent features without departing from the above-mentioned inventive concept, such as a technical solution formed by replacing the above-mentioned features with (but not limited to) technical features with similar functions disclosed in the disclosure.

**Claims**

1. An analysis method for audio acquisition, comprising:

   obtaining an audio signal of stereo sound collected by a terminal;
   obtaining audio data corresponding respectively to a plurality of channels by parsing the audio signal;
   determining parameter information of the stereo sound based on the audio data corresponding respectively to the plurality of channels; and
   analyzing metric information about the terminal's audio acquisition capability for the stereo sound based on the parameter information.

2. The method of claim 1, wherein determining parameter information of the stereo sound based on the audio data corresponding respectively to the plurality of channels comprises:

   determining a signal delay difference and an amplitude difference between channels based on the audio data corresponding respectively to the plurality of channels; and
   analyzing metric information about the terminal's audio acquisition capability for the stereo sound based on the parameter information comprises:
   determining sound source positioning information for the terminal's audio acquisition on the stereo sound based on the signal delay difference and the amplitude difference between channels.

3. The method of claim 2, wherein determining sound source positioning information for the terminal's audio acquisition on the stereo sound based on the signal delay difference and the amplitude difference between channels comprises:
   obtaining the sound source positioning information by performing calculation through a preset human auditory positioning model based on the signal delay difference and the amplitude difference between channels.

4. The method of claim 2, wherein after determining the sound source positioning information for the terminal's audio acquisition on the stereo sound based on the signal delay difference and the amplitude difference between channels, the method further comprises:
   determining pickup angle information for the terminal's audio acquisition on the stereo sound based on the sound source positioning information.

5. The method of claim 2, wherein after determining the sound source positioning information for the terminal's audio acquisition on the stereo sound based on the signal delay difference and the amplitude difference between channels, the method further comprises:
   determining sound source positioning deviation information for the terminal's audio acquisition on the stereo sound based on the sound source positioning information and actual sound source position information of the stereo sound.

**6.** The method of claim 2, wherein after determining the sound source positioning information for the terminal's audio acquisition on the stereo sound based on the signal delay difference and the amplitude difference between channels, the method further comprises:

determining positioning deviation information for the terminal to perform audio and video acquisition based on the sound source positioning information and video acquisition positioning information for the terminal's video acquisition corresponding to the stereo sound.

**7.** The method of claim 1, wherein determining parameter information of the stereo sound based on audio data corresponding respectively to the plurality of channels comprises:

determining a signal delay of a target channel based on the audio data corresponding respectively to the plurality of channels, wherein the target channel is a channel with a minimum delay among the plurality of channels; and analyzing metric information about the terminal's audio acquisition capability for the stereo sound based on the parameter information comprises:

determining a delay difference between audio acquisition and video acquisition by the terminal based on the signal delay of the target channel and a delay of the terminal's video signal acquisition.

**8.** The method of claim 1, wherein determining parameter information of the stereo sound based on audio data corresponding respectively to the plurality of channels comprises:

determining frequency response difference information between channels and a delay difference on a link inside the terminal based on the audio data corresponding respectively to the plurality of channels; analyzing metric information about the terminal's audio acquisition capability for the stereo sound based on the parameter information comprises:

determining a channel consistency for the terminal's audio acquisition on the stereo sound based on the frequency response difference information between channels and the delay difference on the link inside the terminal.

**9.** The method of claim 1, wherein determining parameter information of the stereo sound based on audio data corresponding respectively to the plurality of channels comprises:

determining frequency response information of the plurality of channels based on the audio data corresponding respectively to the plurality of channels; analyzing metric information about the terminal's audio acquisition capability for the stereo sound based on the parameter information comprises:

determining a frequency range for the terminal's audio acquisition on the stereo sound and crossover point information in a low-frequency range for the terminal's audio acquisition on the stereo sound based on the frequency response information of the plurality of channels.

**10.** The method of claim 1, wherein obtaining audio data corresponding respectively to the plurality of channels by parsing the audio signal comprises:

obtaining the audio data corresponding respectively to the plurality of channels by parsing a decoded audio signal of the stereo sound in a case that the terminal is a device requiring decoding.

**11.** The method of any one of claims 1-10, wherein analyzing metric information about the terminal's audio acquisition capability for the stereo sound based on the parameter information comprises:

analyzing the metric information about the terminal's audio acquisition capability for the stereo sound based on the parameter information determined after each update of a sound source position, wherein an interval between sound source positions in two adjacent times is determined according to positioning accuracy information of the terminal.

**12.** An analysis apparatus for audio acquisition, comprising:

an obtaining module, configured to obtain an audio signal of stereo sound collected by a terminal; a parsing module, configured to obtain audio data corresponding respectively to a plurality of channels by parsing the audio signal; a determining module, configured to determine parameter information of the stereo sound based on the audio data corresponding respectively to the plurality of channels; and an analyzing module, configured to analyze metric information about the terminal's audio acquisition capability for the stereo sound based on the parameter information.

13. An electronic device, comprising a storage medium, a processor and a computer program stored on the storage medium and executable on the processor, wherein the processor implements the method according to any one of claims 1-11 when executing the computer program.

14. A computer storage medium having a computer program stored thereon, wherein when the computer program is executed by a processor, the method according to any one of claims 1-11 is implemented.

obtain an audio signal of stereo sound collected by a terminal — 101

obtain audio data corresponding respectively to a plurality of channels by parsing the audio signal — 102

determine parameter information of the stereo sound based on the audio data corresponding respectively to the plurality of channels; — 103

analyze metric information about the terminal's audio acquisition capability for the stereo sound based on the parameter information — 104

FIG. 1

obtain an audio signal of stereo sound collected by a terminal — 201

obtain audio data corresponding respectively to a plurality of channels by parsing the audio signal — 202

determine a signal delay difference and an amplitude difference between channels based on the audio data corresponding respectively to the plurality of channels — 203

determine sound source positioning information for the terminal's audio acquisition on the stereo sound based on the signal delay difference and the amplitude difference between channels — 204

FIG. 2

Obtain an audio signal of stereo sound collected by a terminal — 301

obtain audio data corresponding respectively to a plurality of channels by parsing the audio signal — 302

determine a signal delay of a target channel based on the audio data corresponding respectively to the plurality of channels — 303

a delay difference between audio acquisition and video acquisition by the terminal based on the signal delay of the target channel and a delay of the terminal's video signal acquisition — 304

FIG. 3

obtain an audio signal of stereo sound collected by a terminal — 401

obtain audio data corresponding respectively to a plurality of channels by parsing the audio signal — 402

determine frequency response difference information between channels and a delay difference on a link inside the terminal based on the audio data corresponding respectively to the plurality of channels — 403

determine a channel consistency for the terminal's audio acquisition on the stereo sound based on the frequency response difference information between channels and the delay difference on the link inside the termina — 404

FIG. 4

| obtain an audio signal of stereo sound collected by a terminal | 501 |

| obtain audio data corresponding respectively to a plurality of channels by parsing the audio signal | 502 |

| determine frequency response information of the plurality of channels based on the audio data corresponding respectively to the plurality of channels | 503 |

| determine a frequency range for the terminal's audio acquisition on the stereo sound and crossover point information in a low-frequency range for the terminal's audio acquisition on the stereo sound based on the frequency response information of the plurality of channels | 504 |

FIG. 5

audio acquisition analysis apparatus

obtaining module — 61

parsing module — 62

determining module — 63

analyzing module — 64

FIG. 6

Electronic device

Memory

Application

Operating system

Data

702

700

701

Processor

Communication bus

706

Communication interface

703

Output unit

705

Input unit

704

FIG. 7

## INTERNATIONAL SEARCH REPORT

| International application No. |
|---|
| **PCT/CN2022/139713** |

| **A.** | **CLASSIFICATION OF SUBJECT MATTER** |
|---|---|

H04R 5/00(2006.01)i;  H04R 29/00(2006.01)i;  H04S3/00(2006.01)i

According to International Patent Classification (IPC) or to both national classification and IPC

| **B.** | **FIELDS SEARCHED** |
|---|---|

Minimum documentation searched (classification system followed by classification symbols)

IPC:H04R H04S

Documentation searched other than minimum documentation to the extent that such documents are included in the fields searched

Electronic data base consulted during the international search (name of data base and, where practicable, search terms used)

CNABS; CNTXT; CNKI; VEN; DWPI; USTXT; WOTXT; EPTXT; IEEE: 立体声, 三维, 音频, 语音, 麦克风, 能力, 性能, 指标, 分析, 评价, 评估, 测试, 声道, 参数, 延时, 时延, 幅度, 频率响应, 频响, 声源, 定位, stereo, 3D, audio, microphone, function, performance, analyse, evaluate, test, track, parameter

| **C.** | **DOCUMENTS CONSIDERED TO BE RELEVANT** | |
|---|---|---|

| Category* | Citation of document, with indication, where appropriate, of the relevant passages | Relevant to claim No. |
|---|---|---|
| X | CN 109275084 A (BEIJING XIAOMI INTELLIGENT TECHNOLOGY CO., LTD.) 25 January 2019 (2019-01-25) <br> description, paragraphs [0044]-[0232] and [0246]-[0249] | 1-14 |
| Y | CN 111031463 A (FUJIAN CENTERM INFORMATION CO., LTD.) 17 April 2020 (2020-04-17) <br> description, paragraphs [0034]-[0088] | 1-14 |
| Y | CN 104378728 A (CHANGZHOU AUDIO LABS INTELLIGENT TECHNOLOGY CO., LTD.) 25 February 2015 (2015-02-25) <br> description, paragraphs [0056]-[0066] | 1-14 |
| A | CN 109285556 A (BAIDU ONLINE NETWORK TECHNOLOGY (BEIJING) CO., LTD.) 29 January 2019 (2019-01-29) <br> entire document | 1-14 |
| A | CN 113875265 A (SZ DJI TECHNOLOGY CO., LTD.) 31 December 2021 (2021-12-31) <br> entire document | 1-14 |

☑ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **28 August 2023** | **28 August 2023** |

| Name and mailing address of the ISA/CN | Authorized officer |
|---|---|
| **China National Intellectual Property Administration (ISA/ CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2022/139713** |

**C.     DOCUMENTS CONSIDERED TO BE RELEVANT**

| Category* | Citation of document, with indication, where appropriate, of the relevant passages | Relevant to claim No. |
| --- | --- | --- |
| A | US 2021306782 A1 (INTEL CORP.) 30 September 2021 (2021-09-30) entire document | 1-14 |

Form PCT/ISA/210 (second sheet) (July 2022)

**INTERNATIONAL SEARCH REPORT**
Information on patent family members

International application No.

**PCT/CN2022/139713**

| Patent document cited in search report | | | Publication date (day/month/year) | Patent family member(s) | | | Publication date (day/month/year) |
|---|---|---|---|---|---|---|---|
| CN | 109275084 | A | 25 January 2019 | CN | 109275084 | B | 01 January 2021 |
| CN | 111031463 | A | 17 April 2020 | CN | 111031463 | B | 17 August 2021 |
| CN | 104378728 | A | 25 February 2015 | CN | 104378728 | B | 25 May 2016 |
| CN | 109285556 | A | 29 January 2019 | CN | 109285556 | B | 20 May 2022 |
| CN | 113875265 | A | 31 December 2021 | WO | 2021212287 | A1 | 28 October 2021 |
| US | 2021306782 | A1 | 30 September 2021 | | None | | |

Form PCT/ISA/210 (patent family annex) (July 2022)